# EUROPÄISCHE PATENTANMELDUNG

(11) **EP 0 527 254 A1**
(43) Veröffentlichungstag der Anmeldung: **17.02.1993**
(21) Anmeldenummer: 91113517.6
(22) Anmeldetag: 12.08.1991
(51) Int. Cl.: B60Q 1/30, B60Q 11/00

(54) **Prüfschaltung zur Prüfung elektrischer Installationen in einem Fahrzeug**

(71) Anmelder: SIEMENS AKTIENGESELLSCHAFT, D-80333 München (DE)
(72) Erfinder: Glehr, Manfred, Dipl.-Ing., W-3170 Gifhorn (DE)

(57) **Zusammenfassung**

Prüfschaltung (P), die selbsttätig das Vorhandensein und / oder die Zuverlässigkeit von einer oder mehreren elektrischen Installationen (I) in einem Fahrzeug prüft, indem sie, zur Feststellung ob ein Anhänger (A) an ein KFZ (K) angeschlossen ist, mit zumindest einer zu einer elektrischen Installation (I) des Anhängers (A) führenden Leitung (L) des Anhängers (A) verbunden ist, die betreffende Leitung (L) zumindest von Zeit zu Zeit selbsttätig auf das Vorhandensein und / oder die Zuverlässigkeit dieser Installation (I) prüft und danach ein dem Prüfergebnis entsprechendes Ausgangssignal an das KFZ (K) abgibt.

## Beschreibung

Die Erfindung geht von dem im Oberbegriff des Patentanspruches 1 definierten Gegenstand aus, der für sich nicht nur dem Fachmann, sondern auch vielen Laien bekannt ist. So bewirkt eine solche Prüfschaltung in nahezu allen KFZ, daß beim Start des Motors Signallämpchen aufleuchten, wodurch zumindest die Funktionstüchtigkeit dieser verschiedenen, im Instrumentenpaneel angebrachten Signallämpchen erkennbar wird, darüberhinaus auch Daten wie die derzeitige Menge des getankten Treibstoffes.

Durch die nicht vorveröffentlichte
- EP-Anmeldung 91.102284.6 (= GR 91 P 1087 E)
ist bekannt, durch besondere Schalter und durch eine besondere räumliche Anordnung dieser Schalter in einem KFZ mit Anhänger die Anzahl und die Dicke von Leitungen sowie den Aufwand für Schalter zur Steuerung der Lampen I von rückwärtigen Leuchten reduzieren zu können.

Die Aufgabe,
- mit möglichst wenig technischem Aufwand die Zuverlässigkeit des Betriebes eines KFZ mit Anhänger zu erhöhen, und
- dazu vor allem zuverlässig selbsttätig prüfen zu können, ob in elektrischer Hinsicht ein Anhänger in einwandfreier Weise an ein KFZ angekoppelt ist und ob daher die elektrischen Installationen des Anhängers jedenfalls mit einer gewissen Wahrscheinlichkeit richtig funktionieren,
wird erfindungsgemäß durch den im Patentanspruch 1 definierten Gegenstand gelöst. Wird nämlich von der Prüfschaltung festgestellt, daß die betreffende Installation des Anhängers richtig angeschlossen ist und jedenfalls im Prinzip richtig funktioniert, dann kann davon ausgegangen werden, daß die elektrische Anhängerkupplung, also der Verbindungsstecker zwischen dem vorderen KFZ und dem Anhänger, richtig ineinandergesteckt ist und daß wohl der ganze Anhänger in elektrischer Hinsicht richtig an das KFZ angekoppelt ist.

Die Erfindung vermeidet also, dazu eine aufwendige Meßtechnik installieren zu müssen. Die Erfindung benutzt nämlich zur Prüfung eine ohnehin vorhandene Leitung und die ohnehin vorhandene Installation, statt z.B. eine besondere Prüfleitung und / oder als Leitungsabschluß einen besonderen Prüfwiderstand anzubringen und dessen Intaktheit zu prüfen. Außerdem kann durch die Erfindung auch ein Kurzschluß oder Kabelbruch erkannt werden, weil dann die Erfindung einen ungewöhnlichen Widerstand feststellen kann, bzw. ungewöhnliche Meßwerte, die direkt oder indirekt durch den ungewöhnlichen Widerstand hervorgerufen sind.

Die Erfindung ist nicht nur günstig für Gespanne, die aus einem PKW mit Anhänger, z.B. mit Wohnanhänger oder mit Transportanhänger, bestehen. Sie ist vor allem auch günstig für GeSpanne, die aus einem LKW und Transportanhängern bestehen.

Die in den Unteransprüchen definierten Gegenstände gestatten, zusätzliche Vorteile zu erreichen. U.a. gestatten nämlich die zusätzlichen Maßnahmen gemäß dem Patentanspruch
- 2,: die Prüfung auf eine besonders einfache, grob angenäherte Erfassung des ohmschen Widerstandes dieser Lampe, oder auf die Erfassung einer von diesem ohmschen Widerstand abhängigen Größe, beschränken zu können,
- 3,: die Prüfung auf eine besonders oft benötigte und besonders oft durch langes Einschalten ausfallende Lampe zu richten,
- 4,: die Prüfung auf eine besonders oft benötigte Lampe zu richten, die überdies zur Verringerung der Anzahl von Unfällen besonders zuverlässig betriebsbereit sein soll,
- 5 und 6,: die Prüfung auf eine Lampe zu richten, die besonders viel Watt verbraucht und wegen ihres besonders heißen Glühfadens relativ schnell defekt werden kann,
- 7,: die Zuverlässigkeit des Betriebes des KFZ mit Anhänger besonders auch beim Rückwärtsfahren mit eingeschalteter Lampe der Nebelschlußleuchte und / oder des Rückwärtsfahrscheinwerfers zu erhöhen, indem dann Blendungen des rückwärts schauenden Fahrers durch das Leuchten der am KFZ selber angebrachten entsprechenden Lampe vermieden werden,
- 8,: den durch die Prüfschaltung veranlaßten Stromverbrauch zu verringern, indem diese Prüfschaltung nur dann einen Schalter, z.B. ein Relais, zur Unterbrechung der Stromversorgung der Nebelschlußleuchte des KFZ steuert, wenn der Fahrer die Nebelschlußleuchte einschaltete, sowie
- 9,: besonders wenig Aufwand zu benötigen, z.B. indem diese Weiterbildung auch noch von den Lehren der oben zitierte EP-Anmeldung 91.102284.6 Gebrauch macht.

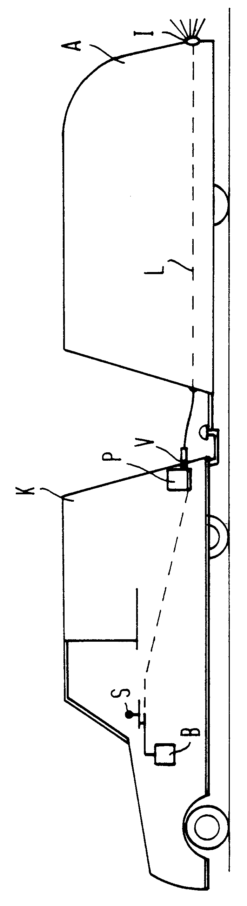

Die Erfindung und Weiterbildungen derselben werden anhand des in der Figur - der Übersichtlichkeit wegen schematisch - dargestellten Ausführungsbeispieles der Erfindung weiter erläutert.

Diese Figur zeigt ein Gespann K/A, bestehend aus einem KFZ K mit einem daran angehängten Anhänger A. Eine elektrische Anhängerkupplung V stellt die elektrischen Verbindungen zwischen dem KFZ K und den verschiedenen elektrischen Installationen I im Anhänger A her. Bei diesen Installationen I des Anhängers A kann es sich z.B. um Lampen I der Schlußleuchten, der Nebelschlußleuchte, der Blinkleuchten und / oder eines Rückwärtsfahrscheinwerfers des Anhängers A handeln. Im in der Figur gezeigten Beispiel wird zumindest ein Teil dieser Installationen I des Anhängers A vom KFZ aus, nämlich vom Fahrer, jeweils über zugeordnete Schalter S gesteuert und damit aus der Batterie B des KFZ K und / oder aus der Lichtmaschine / dem Stromerzeuger des KFZ K mit Strom versorgt. Es kann sich aber auch um beliebige sonstige, vom ziehenden KFZ K her versorgte - evtl. auch vom KFZ K her gesteuerte - elektrische Installationen I des Anhängers A handeln, also auch um ein ABS für die Räder des Anhängers A, um eine elektronisch gesteuerte Lenkung von Rädern der Anhängers A, um eine Niveauregulierung des Anhängers A, usw.

Um die Zuverlässigkeit des Betriebes des Gespannes zu erhöhen, ist irgendwo im Gespann - im gezeigten Beispiel nämlich am Heck des KFZ K - eine Prüfschaltung P angebracht. Diese prüft zumindest von Zeit zu Zeit - z.B. bei jedem Start des Motors - selbsttätig das Vorhandensein und evtl. auch die Zuverlässigkeit des Betriebes von einer der verschiedenen elektrischen Installationen I des Anhängers A.

Um mit möglichst wenig technischem Aufwand mittels dieser Prüfschaltung P festzustellen, ob der Anhänger A an das KFZ K angeschlossen ist, ist erfindungsgemäß zeitweise oder ständig die Prüfschaltung P mit zumindest einer Leitung L des Anhängers A verbunden, welche speziell zu einer elektrischen Installation I des Anhängers A, also z.B. zur Lampe I der Schlußleuchte des Anhängers A führt. Diese Leitung L ist also, zumindest für die Prüfschaltung P in elektrischer Hinsicht, getrennt von Leitungen zu ähnlichen Installationen, die im KFZ K selber angebracht sind. Diese Trennung der betreffenden Leitungen kann z.B. mittels Gleichrichter oder durch Anbringung von räumlich völlig getrennten Leitungen erreicht werden. Dabei prüft die erfindungsgemäße Prüfschaltung P die zu einer Installation I des Anhängers A führende Leitung L zumindest von Zeit zu Zeit, also z.B. bei jedem Start des Motors, selbsttätig auf das Vorhandensein und evtl. auch auf die Zuverlässigkeit speziell dieser Installation I des Anhängers A, wonach die Prüfschaltung P ein dem Prüfergebnis entsprechendes Ausgangssignal an das KFZ K abgibt, also z.B. eine optische und / oder akustische Anzeige an den Fahrer des KFZ K und / oder einen Steuerbefehl an eine elektronische Steuereinheit im KFZ K abgibt. Auf diese Weise kann die Prüfschaltung P zuverlässig selbsttätig prüfen, ob der Anhänger A in elektrischer Hinsicht in einwandfreier Weise an das KFZ K angekoppelt ist und ob daher - jedenfalls mit einer gewissen Wahrscheinlichkeit - alle elektrischen Installationen I des Anhängers A richtig funktionieren.

Die Erfindung ist aber nicht auf eine Prüfschaltung P beschränkt, welche nur über eine einzige Leitung L eine einzige Installation L des Anhängers A prüft. Die Prüfschaltung P kann im Prinzip über die betreffende Leitung L auch gleichzeitig mehrere an diese Leitung L angeschlossene Installationen I des Anhängers A prüfen, z.B. beide Lampen I von zwei Schlußleuchten des Anhängers A. Außerdem kann die Prüfschaltung P an sich auch über mehrere, im Anhänger A angebrachte, von der Prüfschaltung P an sich getrennt ansteuerbare Leitungen L gleichzeitig oder zeitlich nacheinander mehrere elektrische Installationen I des Anhängers A prüfen, also z.B. auch die Lampe I der Schlußleuchte des Anhängers A und die Lampen von zwei Blinkerleuchten der Anhängers A. Auch dann kann also die Prüfschaltung P zuverlässig selbsttätig prüfen, ob der Anhänger A in elektrischer Hinsicht in einwandfreier Weise an das KFZ K angekoppelt ist und ob daher die restlichen, nicht von der Prüfschaltung P geprüften elektrischen Installationen I des Anhängers A, jedenfalls mit einer gewissen Wahrscheinlichkeit, ebenfalls richtig funktionieren.

Die erfindungsgemäße Prüfschaltung P dient also dazu, die elektrischen Verhältnisse von im Anhänger A angebrachten Installationen I zu prüfen. Die Prüfschaltung P dient an sich also nicht dazu, die elektrischen Verhältnisse hinsichtlich ähnlicher Installationen zu prüfen, die im ziehenden KFZ K angebracht sind; - die erfindungsgemäße Prüfschaltung P kann aber zusätzlich zur Prüfung solcher Installationen des KFZ K mitausgenutzt werden, indem sie auch mit speziell zu solchen Leitungen führenden Installationen verbunden wird.

Wird aber von der Prüfschaltung P festgestellt, daß die betreffende Installation des Anhängers A richtig angeschlossen ist und jedenfalls im Prinzip richtig funktioniert, dann kann davon ausgegangen werden, daß wohl der ganze Anhänger in elektrischer Hinsicht richtig an das KFZ K angekoppelt ist. Die Erfindung vermeidet also, dazu eine aufwendige Meßtechnik installieren zu müssen.

Die erfindungsgemäß geprüfte Installation I des Anhängers A kann eine Lampe I des Anhängers A sein. Dabei kann diese Lampe I z.B. zu einer Schlußleuchte des Anhängers A gehören, eine besonders oft benötigte und besonders oft durch langes Einschalten ausfallende Lampe I geprüft wird. Eine solche Lampe I kann auf besonders einfache Weise z.B. dadurch geprüft werden, daß die Prüfschaltung P grob angenähert den ohmschen Widerstand dieser Lampe I prüft, oder z.B. eine andere elektrische Größe, welche direkt oder indirekt von diesem ohmschen Widerstand der Lampe I abhängt. Der Widerstand einer intakten Lampe ist klein genug, daß die erfindungsgemäße Prüfung nicht mehr durch Kriechströme, z.B. Leckwiderstände, gestört wird. Der Widerstand einer intakten Lampe ist aber auch groß genug, daß die erfindungsgemäße Prüfung auch einen Kurzschluß bzw. entsprechende Defekte der Isolation an der geprüften Leitung als solche erkennen kann.

Die geprüfte Lampe I des Anhängers A kann aber auch z.B. zu einer Blinkerleuchte des Anhängers A gehören. Dann prüft die Prüfschaltung P eine Lampe I, die zur Verringerung der Anzahl von Unfällen besonders zuverlässig betriebsbereit sein soll.

Die geprüfte Lampe I kann aber z.B. auch die Lampe I einer Nebelschlußleuchte des Anhängers A und / oder des Rückwärtsfahrscheinwerfers der Anhängers A sein. Dann wird eine Lampe I geprüft, die besonders viel Watt verbraucht und wegen ihres besonders heißen Glühfadens relativ schnell defekt werden kann.

Das Ausgangssignal der Prüfschaltung P kann, wie bereits erwähnt, verschiedenen Zwecken dienen. So kann die Prüfschaltung P mittels ihres Ausgangssignales die Lampe I der Nebelschlußleuchte des KFZ K und / oder des Rückwärtsfahrscheinwerfers des KFZ K abschalten, wenn nämlich die Prüfschaltung P feststellt, daß der Anhänger A vorhanden ist und dieser Anhänger A selber eine intakte Lampe I in seiner Nebelschlußleuchte und / oder in seinem Rückwärtsfahrscheinwerfer aufweist. Das erhöht die Zuverlässigkeit des Betriebes des Gespannes K/A besonders beim Rückwärtsfahren mit eingeschalteter Nebelschlußleuchte und / oder mit eingeschaltetem Rückwärtsfahrscheinwerfer, weil dann Blendungen des rückwärts schauenden Fahrers durch das Leuchten der am KFZ K selber angebrachten entsprechenden Leuchte vermieden werden.

Dazu kann auch vorgesehen sein, daß die Prüfschaltung P die Nebelschlußleuchte des KFZ K und / oder des Rückwärtsfahrscheinwerfers des KFZ K nur während der Dauer des Einschaltens der Nebelschlußleuchte des Anhängers A und / oder des Rückwärtsfahrscheinwerfers des Anhängers A abschaltet. Dadurch wird vermieden, daß die Prüfschaltung P - z.B. durch Erregung eines den Strom zur betreffenden Leuchte des KFZ K verhindernden Relais - auch dann Strom zur Abschaltung der betreffenden Lampe des KFZ K verbraucht, wenn der Fahrer gar nicht die Nebelschlußleuchte des Anhängers A und / oder des Rückwärtsfahrscheinwerfers des Anhängers A einschaltete. Die Prüfschaltung P verbraucht nur dann Strom zur Abschaltung der betreffenden Lampe des KFZ K, wenn der Fahrer die betreffende Leuchte des Anhängers A einschaltete.

Wenn die erfindungsgemäße Prüfschaltung P in der am Heck des KFZ K angeordneten elektrischen Anhängerkupplung V angebracht ist - z.B. gemäß den Lehren der oben zitierte EP-Anmeldung 91.102284.6 zusammen mit Schaltern zur Steuerung der Installationen I des Anhängers A - , dann benötigt man oft besonders wenig Aufwand. Man kann dann in dieser Anhängerkupplung V nämlich nicht nur besondere Halbleiterschalter als Schalter für die Installationen I des Anhängers A benutzen, sowie im ganzen Gespann K/A die Anzahl und die Dicke von vielen der Leitungen sowie den Aufwand für die Schalter zur Steuerung der Lampen I von rückwärtigen Leuchten oft spürbar reduzieren, sondern auch platz- und leitungsparend in der Anhängerkupplung V die Prüfschaltung P mitunterbringen.

## Patentansprüche

1. Prüfschaltung (P), die zumindest von Zeit zu Zeit
- z.B. bei jedem Start des Motors -
selbsttätig das Vorhandensein und / oder die Zuverlässigkeit von einer oder mehreren elektrischen Installationen (I)
- z.B. von Lampen (I) -
in einem Fahrzeug prüft,
**dadurch gekennzeichnet,** daß
- sie (P), zur Feststellung ob ein Anhänger (A) an ein KFZ (K, z.B. z.B. an einen LKW oder PKW) angeschlossen ist, mit zumindest einer zu einer elektrischen Installation (I) des Anhängers (A)
- z.B. zu dessen Schlußleuchte -
führenden Leitung (L) des Anhängers (A), wenn nicht mit mehreren zu Installationen (I) des Anhängers (A) führenden Leitungen (L) des Anhängers (A), zeitweise oder ständig verbunden ist und
- sie (P) die betreffende Leitung (L) zumindest von Zeit zu Zeit
- z.B. bei jedem Start des Motors -
selbsttätig auf das Vorhandensein und / oder die Zuverlässigkeit dieser Installation (I) prüft und danach ein dem Prüfergebnis entsprechendes Ausgangssignal an das KFZ (K) abgibt.

2. Prüfschaltung nach Patentanspruch 1,
**dadurch gekennzeichnet,** daß
- die geprüfte Installation (I) eine Lampe (I) des Anhängers (A) ist.

3. Prüfschaltung nach Patentanspruch 2,
**dadurch gekennzeichnet,** daß
- die Installation (I) die Lampe (I) einer Schlußleuchte des Anhängers (A) ist.

4. Prüfschaltung nach Patentanspruch 2,
**dadurch gekennzeichnet,** daß
- die Installation (I) die Lampe (I) einer Blinkerleuchte des Anhängers (A) ist.

5. Prüfschaltung nach Patentanspruch 2,
**dadurch gekennzeichnet,** daß
- die Installation (I) die Lampe (I) einer Nebelschlußleuchte des Anhängers (A) ist.

6. Prüfschaltung nach Patentanspruch 2,
**dadurch gekennzeichnet,** daß
- die Installation (I) die Lampe (I) eines Rückfahrscheinwerfers des Anhängers (A) ist.

7. Prüfschaltung nach Patentanspruch 5 und / oder 6,
**dadurch gekennzeichnet,** daß
- sie (P) mittels ihres Ausgangssignales die Lampe der Nebelschlußleuchte des KFZ (K) und / oder des Rückfahrscheinwerfers des KFZ (K) abschaltet, wenn sie (P) feststellt, daß der Anhänger (A) vorhanden ist und selber eine intakte Lampe (I) in seiner Nebelschlußleuchte und / oder seines Rückfahrscheinwerfers aufweist.

8. Prüfschaltung nach Patentanspruch 7,
**dadurch gekennzeichnet,** daß
- sie (P) die Lampe der Nebelschlußleuchte des KFZ (K) und / oder des Rückfahrscheinwerfers des KFZ (K) nur während der Dauer des Einschaltens der Nebelschlußleuchte des Anhängers (A) abschaltet.

9. Prüfschaltung nach einem der vorhergehenden Patentansprüche,
**dadurch gekennzeichnet,** daß
- sie (P) in der am Heck des KFZ (K) angeordneten elektrischen Anhängerkupplung (V) angebracht ist und
- sie (P), zur Feststellung ob der Anhänger (A) an das KFZ (K) angeschlossen ist, mit zumindest einer von der Anhängerkupplung (V) zur elektrischen Installation (I) des Anhängers (A) führenden Leitung (L) des Anhängers (A), wenn nicht mit mehreren zu Installationen (I) des Anhängers (A) führenden Leitungen (L) des Anhängers (A), zeitweise oder ständig verbunden ist.
